# EUROPÄISCHE PATENTANMELDUNG

(11) **EP 1 429 441 A2**
(43) Veröffentlichungstag der Anmeldung: **16.06.2004**
(21) Anmeldenummer: 03020863.1
(22) Anmeldetag: 15.09.2003
(51) Int. Cl.: H02J 7/14

(54) **Verfahren zur Ladung einer Batterie**

(30) Priorität: 12.12.2002 DE 10258337
(71) Anmelder: ROBERT BOSCH GMBH, 70442 Stuttgart (DE)
(72) Erfinder: Aumayer, Richard, 31199 Diekholzen (DE); Ehret, Christine, 89275 Thalfingen (DE)

(57) **Zusammenfassung**

Es wird ein Verfahren zur Ladung einer Batterie angegeben, das eine Dynamisierung der Ladephase der Batterie bewirkt und damit ein optimales Laden ermöglicht. Die Dynamisierung der Ladephase soll ein gutes Durchmischen der Batteriesäure und/oder eine Depolarisierung der Elektroden erzielen und letztendlich zu einer Verbesserung der Ladestromaufnahme führen. Das Ladeverfahren kann dabei wenigstens nach zwei unterschiedlichen Vorgehensweisen auf durchgeführt werden. Bei einer ersten Vorgehensweise wird durch gezielte Entladungen eine Depolarisierung der Elektroden infolge lokal absinkender Säuredichte ermöglicht und bei einer zweiten Vorgehensweise wird durch zeitweises Erhöhen der Ladespannung über die sogenannte Gasungsspannung der Batterie eine gute Durchmischung der Batteriesäure erhalten. Beides führt zu verbesserter Batterieladung. In einer Ausgestaltung des Verfahrens werden beide Vorgehensweisen miteinander kombiniert.

## Beschreibung

### Stand der Technik

Die Erfindung geht aus von einem Verfahren zur Ladung einer Batterie mit den Merkmalen des Oberbegriffs des Anspruchs 1 und betrifft insbesondere die Ladung von Blei-Säure-Batterien in Kraftfahrzeugen.

Im Bordnetz von Kraftfahrzeugen wird die für die elektrische Versorgung benötigte elektrische Energie üblicherweise mit Hilfe von Generatoren erzeugt, deren Ausgangsspannung mit Hilfe eines Spannungsreglers in vorgebbarer Weise auf im wesentlichen konstante Werte geregelt wird. Üblicherweise wird die Batterie mit dieser etwa konstanten Spannung geladen, wobei die tatsächliche Ladespannung mit Hilfe des Spannungsreglers so eingestellt wird, dass vorgebbare Parameter berücksichtigt werden. Dazu wird ein Spannungsregler eingesetzt, der nach einer Kennlinie regelt, die von verschiedenen Parametern, beispielsweise der Temperatur abhängen kann. Es wird dann zur Regelung ein Punkt auf dieser Kennlinie ausgewählt und entsprechend eine Regelspannung eingestellt.

Der Wert der eingestellten Spannung ist nach oben begrenzt, um negative Auswirkungen auf die Batterie weitmöglichst zu reduzieren. So soll die Korrosion und der Wasserverbrauch möglichst reduziert werden.

In modernen Fahrzeugen mit vielfältigen Stromverbrauchern müssen leistungsfähige Generatoren eingesetzt werden, die bereits bei niedrigen Motordrehzahlen längere Ladephasen der Batterie ermöglichen. Bei der Ladung von Batterien unterhalb der Gasungsspannung kommt es zu einer Konzentrationspolarisation der Elektroden durch die gebildete Säure mit höherer Dichte. Besonders betroffen sind hierbei die wartungsfreien Batterien in Blei-Calcium-Technik. Die Gegenspannung der Batterie steigt durch diese Vorgänge und es wird kein Ladestrom mehr aufgenommen. Die Säure höherer Dichte sinkt in der Zelle nach unten ab. Da der Austausch der Säure direkt in der Porenstruktur der Platten der Batterie mit dem Säurereservoir zwischen den Elektroden nur durch Diffusion erfolgen kann, gehen Austauschvorgänge sehr langsam vor sich. Vor allem in Kombination mit Entladungen durch hohe Ströme, die vorwiegend den oberen Elektrodenteil der Batterieelektroden entladen, kommt es zu der beobachteten Säureschichtung in der Batterie, die die nutzbare Kapazität der Batterie einschränkt und zu einer Reduzierung der Gebrauchsdauer führt.

### Vorteile der Erfindung

Durch das erfindungsgemäße Verfahren mit den Merkmalen des Anspruchs 1 kann vermieden werden, dass durch auftretende Säureschichtung in der Batterie die nutzbare Kapazität eingeschränkt wird. Erzielt wird dieser Vorteil durch eine Dynamisierung der Ladephase, die entweder durch erzwungene Entladungen oder durch zeitweilige Erhöhung der Ladespannung erreicht wird. Solche Entladungen werden in einer geeigneten Weise eingeleitet. Beispielsweise wird in vorteilhafter Weise während einer Ladephase in regelmäßigen Zeitabständen eine kurze Entladung erzwungen. Die Dynamisierung der Ladephase kann aber auch durch zeitweiliges Überschreiten der Gasungsspannung erzielt werden. Durch das entstehende Gas wird eine Durchmischung der Säure in den Zellen der Batterie erhalten, wodurch die zu negativen Effekten führende Säureschichtung reduziert wird.

Weitere Vorteile der Erfindung werden durch die in den Unteransprüchen angegebenen Maßnahmen erzielt. Dabei ist besonders vorteilhaft, dass als Folge der guten Durchmischung der Säure der Batterie eine generelle Verbesserung der Ladestromaufnahme erzielt werden und es ist auch eine genauere Bestimmung des Ladezustandes der Batterie über eine Bestimmung der Säuredichte möglich. Dieser exakt ermittelbare Ladezustand kann in vorteilhafter Weise in einem nachfolgenden Batteriemanagement berücksichtigt werden.

Weiterhin ist vorteilhaft, dass sowohl bei der Dynamisierung durch zeitweiliges Entladen als auch bei der Dynamisierung durch zeitweiliges Erhöhen der Ladespannung und damit auch der Ausgangsspannung des Generators Parameter und Randbedingungen so berücksichtigt werden können, dass eine optimale Batterieladung ohne störende Nebeneffekte erhalten wird. Dabei wir in vorteilhafter Weise die Korrosion an den Batterieelektroden genauso vermieden wie der Wasserverbrauch minimiert.
Sind spannungsempfindliche Verbraucher zu berücksichtigen, kann in vorteilhafter Weise so vorgegangen werden, dass eine Spannungserhöhung nur dann eingeleitet wird, wenn diese Verbraucher ausgeschaltet sind oder wenn ihr Abschalten möglich ist.

In einer bevorzugten Ausgestaltung werden beide Verfahren zur Dynamisierung der Ladephase miteinander kombiniert und sowohl Entladungen zu vorgebbaren Zeiten oder bei vorgebbaren Bedingungen als auch eine Erhöhung der Ladespannung zu vorgebbaren Zeiten oder bei vorgebbaren Bedingungen vorgenommen.

### Zeichnung

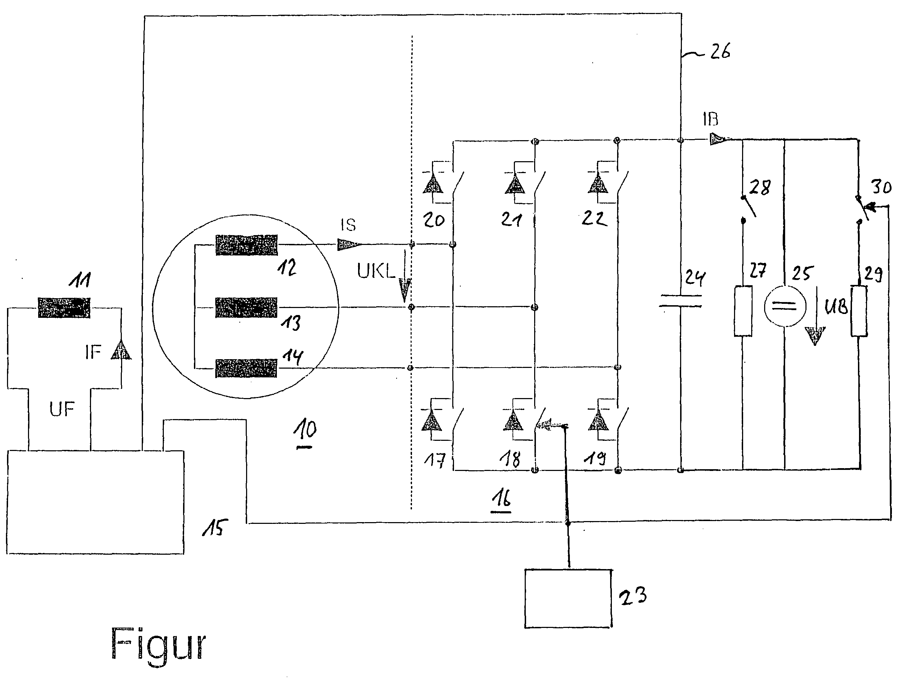

Ein Beispiel eines Fahrzeugbordnetzes, das die erfindungswesentlichen Bestandteile des Fahrzeugbordnetzes aufzeigt, ist in der einzigen Figur der Zeichnung dargestellt und wird in der nachfolgenden Beschreibung näher erläutert.

### Beschreibung

In der Figur ist ein Generator sowie die zugehörige Ansteuerschaltung zur Durchführung eines erfindungsgemäßen Verfahrens dargestellt. Der Generator 10 umfasst die Erregerspule 11 und Ständerspulen 12, 13 und 14. Durch die Erregerspule 11 fließt der Feldstrom IF, der vom Spannungsregler 15 in vorgebbarer Weise geregelt wird. Der Generator 10 wird von der Kurbelwelle der nicht dargestellten Brennkraftmaschine über geeignete Koppelmittel angetrieben und gibt eine geregelte Ausgangsspannung bzw. einen Ausgangsstrom ab.

Zur Gleichrichtung des in den Spulen des Generators 10 erzeugten Stromes dient ein Pulswechselrichter 16 mit Pulswechselrichterelementen 17 bis 22, die entweder ebenfalls vom Regler 15 oder von einer externen Steuereinrichtung 23 in vorgebbarer Weise angesteuert werden, um die Generatorausgangsspannung auf gewünschte Werte zu regeln. Anstelle des Pulswechselrichters könnte auch ein herkömmlicher Gleichrichter mit sechs Dioden oder Zenerdioden eingesetzt werden.

Zur Zwischenspeicherung dient ein Kondensator 24, der mit dem Pulswechselrichter in Verbindung steht. Der Generator 10 liefert an seinem Ausgang den Batteriestrom IB, der zur Ladung der Batterie 25 verwendet wird. Der Strom IB wird zur Versorgung der elektrischen Verbraucher im Bordnetz verwendet. Die Batteriespannung ist mit UB bezeichnet. Über die Verbindung 26 wird dem Spannungsregler 15 die Batteriespannung als IST-Wert zugeführt. Die Zuschaltung der Verbraucher 27 erfolgt über Schaltmittel 28, die beispielsweise von der Steuereinrichtung 23 in vorgebbarer Weise angesteuert werden. Die Verbraucher 27 sollen die verschiedenen elektrischen Verbraucher im Fahrzeugbordnetz symbolisieren. Weitere Verbraucher 29 lassen sich über Schaltmittel 30 ebenfalls zu- oder abschalten. Die Verbraucher 29 sind die Verbraucher, die erfindungsgemäß zur Dynamisierung der Ladephase eingeschaltet werden, dies ist beispielsweise die Heckscheibenheizung.

Mit dem in der Zeichnung dargestellten System kann das erfindungsgemäße Ladeverfahren für die Batterie 25 durchgeführt werden. Die benötigten Ansteuerimpulse bzw. Umschaltungen werden mit Hilfe der Steuereinrichtung 23, die als Elektronik am Generator angeordnet werden kann, durchgeführt. Die Steuereinrichtung 23 kann auch Bestandteil des Spannungsreglers sein oder in einem Bordnetz- oder Batteriemanagement-Steuergerät integriert sein und umfasst wenigstens einen Mikroprozessor, der die erforderlichen Berechnungen durchführt, geeignete Speicher, Mittel, über die benötigte Informationen zugeführt werden können sowie Mittel zur Erzeugung von Ansteuerimpulsen. Damit die im Abschnitt "Stand der Technik" genannten Nachteile bei der Batterieladung nicht auftreten, werden von der Steuereinrichtung 23 die beiden im Folgenden beschriebenen Ladeverfahren bzw. Vorgehensweisen durchgeführt:
1 . Die Ladephase wird dynamisiert durch Überschreitung der Gasungsspannung. Damit die Säureschichtung in der Batterie vermieden wird, wird die Ladespannung zu vorgebbaren Zeiten oder Bedingungen über die Gasungsspannung der Batterie angehoben. Dadurch bilden sich Gasblasen in der Säure, die für eine optimale Durchmischung der Säure in den einzelnen Batteriezellen sorgen. Eine permanente Anhebung der Ladespannung verbietet sich wegen der negativen Auswirkungen auf Korrosion und Wasserverbrauch. Die Häufigkeit der Spannungsanhebung kann an vorgebbare Bedingungen angepasst werden und wird beispielsweise in Versuchen ermittelt. Eine Spannungsanhebung auf beispielsweise 16 Volt in einem 12-Volt-Bordnetz wird beispielsweise nur bei ausgeschalteten Lampen durchgeführt, da eine solche Spannungsanhebung zu Lampenflackern führen könnte. Die beschriebene Anhebung der Ladespannung bewirkt generell die Entstehung von Gasblasen, die zu einer Mischung der Säurebereiche mit verschiedenen Dichten führt. Damit wird der Aufbau einer höheren Gegenspannung sowie einer Säureschichtung entgegengewirkt.
   Die Erhöhung der Ladespannung wird von der Steuereinrichtung 23 veranlasst, sofern bestimmte Bedingungen vorliegen. Es wird dann beispielsweise der Sollwert für den Spannungsregler so erhöht, dass der Generator eine Spannung abgibt, die an der Batterie 25 zu einer Spannung von beispielsweise 16 Volt führt. Es ist auch möglich, bei einer gesteuerten Gleichrichterbrücke die Pulswechselrichterelemente so anzusteuern, dass an der Batterie zeitweise eine Spannung anliegt, die über der Gasungsspannung liegt.
   Das Verhältnis Ladezeit zu Überladezeit kann empirisch für die verschiedenen Bordnetze und Batterietypen ermittelt werden ein Verhältnis von beispielsweise 2 Minuten Ladephase und 2 Sekunden Überladephase hat sich als sinnvoll herausgestellt und schließt negative Effekte wie hohen Wasserverbrauch und das Auftreten von Korrosion aus.
2. In einem zweiten Ladeverfahren wird die Dynamisierung der Ladephase durch gezielte Entladungen erzielt. Dabei wird während einer Ladephase in regelmäßigen Abständen eine kurze Entladung erzwungen. Dies wird beispielsweise durch Zuschaltung eines starken Verbrauchers, beispielsweise der Heckscheibe, geschehen. Der zugehörige Schalter 30 des Verbrauchers 29 wird dabei durch Zuführung eines Ansteuersignales kurzfristig geschlossen. Eine Entladung der Batterie 25 kann aber auch durch Unterbrechung der Erregung des Generators erzielt werden. Dazu beeinflusst der Regler 15 oder die Steuereinrichtung 23 den Erregerstrom IE durch die Erregerwicklung 11 so, dass er auf einen minimalen Wert zurück geht.

Ein Entladestoß führt zu einer Depolarisierung der Elektroden, da die Säuredichte lokal absinkt und somit zu kurzzeitig erhöhter Ladestromaufnahme führt. Die Frequenz und die Entladestromstärke, bei der sich optimale Durchmischungen einstellen, kann beispielsweise durch Versuche batterieindividuell ermittelt werden. Werte von beispielsweise 1 Minute Ladung und 12 Sekunden Entladung führen zu guten Ergebnissen. Mit einer derartigen Dynamisierung der Ladephasen kann eine senkrechte Schichtung der Säuredichte mit kurzen Diffusionsstrecken erhalten werden. Eine solche Vorgehensweise kann auch bei Laborladungen eingesetzt werden. Die Reduzierung der Konzentrationspolarisation führt zu einer verbesserten Ladstromaufnahme gegenüber herkömmlichen Systemen.

Auch eine gezielte Entregung des Generators kann zur Erzeugung eines Entladestoßes eingesetzt werden. Dazu schaltet der Spannungsregler 15 den Erregerstrom zu vorgebbaren Zeiten und/oder bei vorgebbaren Bedingungen aus.

Die beiden vorstehend beschriebenen Ladeverfahren können auch in geeigneter Weise miteinander kombiniert werden. Es werden dann zwei Methoden zur Depolarisation der Elektroden gleichzeitig angewandt und eine Säureschichtung kann sicher vermieden werden. Das Verhältnis der Anwendung der beiden Methoden kann batteriespezifisch angepasst werden und ist beispielsweise durch Auswertung von Versuchen zu ermitteln.

Bei einer Spannungsanhebung, die sich auf das gesamte Bordnetz auswirkt, wird auch auf die Leuchtstärke der Scheinwerferlampen eingegriffen. In diesem Fall sollte die Spannungsanhebung nur bei ausgeschalteten Hauptscheinwerfern durchgeführt werden. In Ländern, die Fahrlicht grundsätzlich bei Betrieb des Fahrzeuges vorschreiben bzw. bei Bedingungen, die langanhaltendes Fahrlicht benötigen, kann ein zusätzlicher Lichtsensor eingesetzt werden, wobei dann die dynamisierte Ladung mit Spannungsanhebung ebenfalls nur tagsüber erfolgt, da durch das Tageslicht Schwankungen der Lichtstärke der Scheinwerfer nicht zu stark auffallen.

Bei einem Generator mit einer gesteuerten Gleichrichterbrücke, z.B. einer Brücke mit Pulswechselrichtern kann die Spannungsregelung sowohl über die gesteuerte Brücke als auch durch Beeinflussung des Erregerstromes erfolgen. Bei einem Generator mit einer Diodenbrücke lediglich über die Beeinflussung des Erregerstromes und damit der Höhe der Ausgangsspannung des Generators.

Bei der Durchführung der Ladeverfahren wird derart vorgegangen wird, dass negative Auswirkungen auf bestimmte Größen vermieden werden, wobei bei der Auswahl der Verfahren vorgebbare Prioritäten berücksichtigt werden. Die Erhöhung der Ladespannung wird nur bei vorgebbaren Bedingungen vorgenommen, insbesondere nur dann, wenn keine spannungskritische Verbraucher eingeschaltet sind oder wenn solche Verbraucher vor der Erhöhung der Spannung abgeschaltet werden können.

## Patentansprüche

1. Verfahren zur Ladung einer Batterie, mit einer Steuereinrichtung, die den Ladestrom für die Batterie in vorgebbarer Weise beeinflusst und wenigstens zwei unterschiedliche Ladeverfahren durchführt, **dadurch gekennzeichnet, dass** in einem ersten Verfahren auf eine im Wesentlichen konstante Spannung geregelt wird und in einem zweiten Ladeverfahren Maßnahmen ergriffen werden, die zu einer Dynamisierung führen.

2. Verfahren zur Ladung einer Batterie nach Anspruch 1, **dadurch gekennzeichnet, dass** in dem zweiten Ladeverfahren zusätzlich zu vorgebbaren Zeiten Entladungen erzwungen werden, durch Zuschaltung eines Verbrauchers, insbesondere durch Zuschaltung einer Scheibenheizung oder durch Entregung der Ladeeinrichtung.

3. Verfahren zur Ladung einer Batterie nach Anspruch 1, **dadurch gekennzeichnet, dass** in dem zweiten Ladeverfahren die Ladespannung gegenüber dem üblichen Wert erhöht wird, insbesondere auf Werte von etwa 16 Volt.

4. Verfahren zur Ladung einer Batterie nach Anspruch 3, **dadurch gekennzeichnet, dass** die Erhöhung der Ladespannung durch entsprechende Ansteuerung des Spannungsreglers bewirkt wird, der zur Regelung der Ausgangsspannung einen erhöhten Spannungssollwert vorgibt.

5. Verfahren zur Ladung einer Batterie nach Anspruch 3, **dadurch gekennzeichnet, dass** die Beeinflussung der Ladespannung bei einem Generator mit gesteuerter Gleichrichterbrücke durch Ansteuerung der Pulswechselrichterelemente der Gleichrichterbrücke erfolgt.

6. Verfahren zur Ladung einer Batterie nach nach einem der vorhergehenden Ansprüche, **dadurch gekennzeichnet, dass** die Batterie eine Blei-Säure-Batterie in einem Kraftfahrzeug ist, die mit Hilfe eines Generators geladen wird.

7. Verfahren zur Ladung einer Batterie nach einem der vorhergehenden Ansprüche, **dadurch gekennzeichnet, dass** in dem zweiten Ladeverfahren zusätzlich zu vorgebbaren Zeiten Entladungen erzwungen werden, durch Zuschaltung eines Verbrauchers oder durch Entregung der Ladeeinrichtung und zu vorgebbaren Zeiten die Ladespannung gegenüber dem üblichen Wert erhöht wird.

8. Verfahren zur Ladung einer Batterie nach einem der vorhergehenden Ansprüche, **dadurch gekennzeichnet, dass** die Erhöhung der Ladespannung nur bei vorgebbaren Bedingungen vorgenommen wird, insbesondere nur dann, wenn keine spannungskritische Verbraucher eingeschaltet sind oder dass solche Verbraucher vor der Erhöhung der Spannung abgeschaltet werden.

9. Verfahren zur Ladung einer Batterie nach einem der vorhergehenden Ansprüche, **dadurch gekennzeichnet, dass** bei der Durchführung der Ladeverfahren derart vorgegangen wird, dass negative Auswirkungen auf bestimmte Größen vermieden werden, wobei bei der Auswahl der Verfahren vorgebbare Prioritäten berücksichtigt werden.
